# FASCICULE DE BREVET EUROPEEN

(11) **EP 1 121 853 B1**
(45) Date de publication et mention de la délivrance du brevet: **15.01.2003**
(21) Numéro de dépôt: 00101997.5
(22) Date de dépôt: 02.02.2000
(51) Int. Cl.: A01K 11/00

(54) **Bouton d'identification**
Identifizierungsmarke
Identification tag

(43) Date de publication de la demande: 08.08.2001
(73) Titulaire: BIWI S.A., CH-2855 Glovelier (CH)
(72) Inventeur: Savy, M. Philippe, 2884 Montenol (CH)
(74) Mandataire: Gresset, Jean

(56) Documents cités:
- EP-A- 0 142 195
- EP-A- 0 336 848
- GB-A- 173 797

## Description

La présente invention se rapporte aux boutons d'identification, par exemple du type destiné à être fixé à l'oreille d'un bovin pour pouvoir l'identifier. De tels boutons sont bien connus de l'homme de l'art.

L'un d'entre eux est décrit dans le document CH 595 060. Il comporte deux plaquettes en matériau souple, et une tige reliant les deux plaquettes. Plus précisément, la tige, solidaire de et disposée perpendiculairement à l'une des plaquettes, forme avec cette dernière un élément mâle. La tige est munie d'un épaulement à son extrémité libre. Elle est percée sur toute sa longueur par un alésage axial dans lequel un clou muni d'une pointe, est engagé lors de l'assemblage des plaquettes.

L'autre plaquette comporte une ouverture circulaire renforcée, destinée à recevoir l'extrémité de la tige, et dont le diamètre est supérieur au diamètre de la tige mais inférieur au diamètre de l'épaulement Elle forme ainsi un élément femelle.

Le bouton est fixé à l'oreille d'un animal, au moyen d'une pince de type connu. Celle-ci positionne les deux plaquettes de manière que le clou perce l'oreille, puis que l'épaulement de la tige s'engage dans l'ouverture de l'élément femelle. Après l'opération, la tige est retirée. L'épaulement assure ainsi un verrouillage axial des éléments mâle et femelle, ceux-ci pouvant tourner l'un par rapport à l'autre.

Comme les plaquettes sont faites en un matériau souple, elles se déforment élastiquement lorsqu'elles rencontrent un obstacle, de sorte que l'animal qui porte un tel bouton ne risque pas de se blesser en s'accrochant.

Ce bouton présente toutefois deux inconvénients majeurs. Comme les éléments mâle et femelle ne sont pas reliés l'un à l'autre avant leur fixation sur l'oreille, il faut qu'un seul d'entre eux porte des informations ou qu'ils soient appairés pour garantir la cohérence de l'ensemble.

De plus, l'assemblage doit se faire au moyen d'un outil, ce qui en complique la mise en oeuvre et peut conduire à des problèmes, si les mesures d'hygiène ne sont pas respectées.

Le bouton de marquage décrit dans le document FR 2 442 583 permet de pallier ces inconvénients. Il comprend une partie mâle formant tige à tête de perçage et de retenue, et une partie femelle munie d'une ouverture destinée à recevoir la tête de la tige. Ces deux parties sont faites d'une seule pièce, par injection de matière plastique. Elles sont reliées l'une à l'autre de manière élastique, par un pont dont l'épaisseur de matière est réduite. De la sorte, lorsqu'on assemble les deux parties, la pièce fléchit au niveau du pont.

Ce bouton peut être fixé sans utiliser d'outil particulier. Il présente toutefois l'inconvénient que, si l'animal s'accroche à la boucle que forme le bouton lorsqu'il est mis en place, il risque de se blesser, voire d'arracher une partie de son oreille et perdre sa marque. Il est, en outre, difficile de garantir un pliage précis. La tige peut alors ne pas s'engager sans autre dans l'ouverture, ce qui prolonge le temps de mise en place et provoque des désagréments à l'animal, avec les réactions que cela peut engendrer.

Le but principal de la présente invention est de proposer un bouton permettant de réunir les avantages des deux boutons décrits ci-dessus, tout en évitant leurs inconvénients.

Le bouton selon l'invention est formé d'une première et d'une seconde plaquette, dont l'une est munie d'une tige à tête de perçage et de retenue, qui forment, ensemble, un élément mâle, et dont l'autre comporte une ouverture destinée à recevoir et à maintenir la tête de la tige et constitue un élément femelle. Il est caractérisé en ce que les plaquettes sont reliées l'une à l'autre au moyen d'une charnière formée de:
au moins un charneron, solidaire de la première plaquette,
un pivot solidaire de la seconde plaquette, coaxial au et engagé dans le charneron, et
un organe élastique se déformant lorsqu'une force dépassant une valeur limite est appliquée, et permettant le dégagement du pivot, hors du charneron.

Une telle structure du bouton permet d'assurer un assemblage sans outil, grâce au fait que les éléments mâle et femelle sont parfaitement positionnés l'un par rapport à l'autre, à cause de la charnière qui les relie. En outre, le risque de mélanger deux plaquettes à assembler est aussi éliminé. De plus, comme les deux éléments se séparent au niveau de la charnière, en cas d'accrochage, le risque de blessure de l'animal et/ou de perte du bouton est considérablement réduit.

De manière avantageuse, le charneron comporte un logement dans lequel le pivot, cylindrique, est engagé. Il est muni d'une fente longitudinale qui définit deux lèvres entourant le pivot et formant l'organe élastique. De la sorte, l'articulation se fait dans de bonnes conditions, tout en maîtrisant bien la séparation du charneron et du pivot

L'expérience a montré que, contrairement à la plupart des applications, il n'est pas nécessaire de disposer d'un pivot très résistant et que la solution la plus favorable consiste à le réaliser avec le même matériau et en même temps que la seconde plaquette. Une telle solution permet donc d'augmenter la sécurité du dispositif tout en réduisant son prix.

Afin d'assurer un bon positionnement des plaquettes l'une par rapport à l'autre, et ainsi faciliter l'engagement de la tige dans l'ouverture de l'élément femelle, la charnière comporte deux charnerons et deux pivots engagés chacun dans l'un des charnerons.

La mise en place du bouton selon l'invention se fait sans devoir utiliser un outil. Pour assurer des conditions de travail optimales, il est souhaitable de pouvoir tenir le bouton d'une seule main, les plaquettes restant écartées, malgré la pression exercée pour tenir le bouton. Cela est rendu possible grâce au fait que l'une des plaquettes est munie d'une languette élastique disposée au voisinage de la charnière. Cette languette s'étend en direction de l'autre plaquette pour coopérer avec sa paroi interne. Elle est agencée de manière à:
maintenir élastiquement les plaquettes dans une position ouverte, position dans laquelle la tige est éloignée de l'ouverture, pour faciliter la mise en place du bouton,
fléchir lors de la mise en place, et
épouser la surface de la paroi après la mise en place.

Pour garantir le maximum de sécurité au porter et une bonne rigidité de l'assemblage du bouton, les plaquettes sont faites d'une matière plastique souple, alors que la tige, en matière plastique dure, est munie, à l'une de ses extrémités, d'une assiette moulée dans le plastique souple de la plaquette de l'élément mâle, et à l'autre de ses extrémités d'un épaulement de retenue et d'un trou disposé dans l'axe de la tige. Un clou en métal, en appui contre l'épaulement, est engagé dans le trou. Sa tête présente une forme permettant la perforation d'un organe vivant. L'ouverture de la plaquette de l'élément femelle est en partie fermée par des ergots s'étendant radialement vers son centre, la distance entre les ergots étant supérieure au diamètre de la tige, mais inférieure à la dimension de l'épaulement dans sa partie destinée à coopérer avec les ergots.

De manière à faciliter la mise en place, et plus particulièrement l'engagement, de la tige dans l'ouverture, les ergots définissent un cône de guidage, ouvert vers la plaquette de l'élément mâle, agencé pour faciliter l'engagement de la tige dans l'ouverture.

Pour protéger l'épaulement de tout risque de désenclenchement d'avec la plaquette de l'élément femelle, l'ouverture est entourée d'une paroi tubulaire disposée sur la face externe de la plaquette de l'élément femelle, définissant un logement agencé pour recevoir le clou et l'épaulement.

Il a été constaté que des résultats particulièrement avantageux sont obtenus lorsque l'épaulement est formé d'ailettes s'étendant radialement de la tige vers l'extérieur et que les ergots s'étendent radialement de la paroi de l'ouverture vers son centre, les ailettes et les ergots comportant des surfaces d'appui respectivement parallèles aux faces internes des plaquettes des éléments mâle et femelle.

D'autres avantages et caractéristiques de l'invention ressortiront de la description qui va suivre, faite en regard du dessin annexé, dans lequel:
La figure 1 représente, en perspective, un bouton selon l'invention;

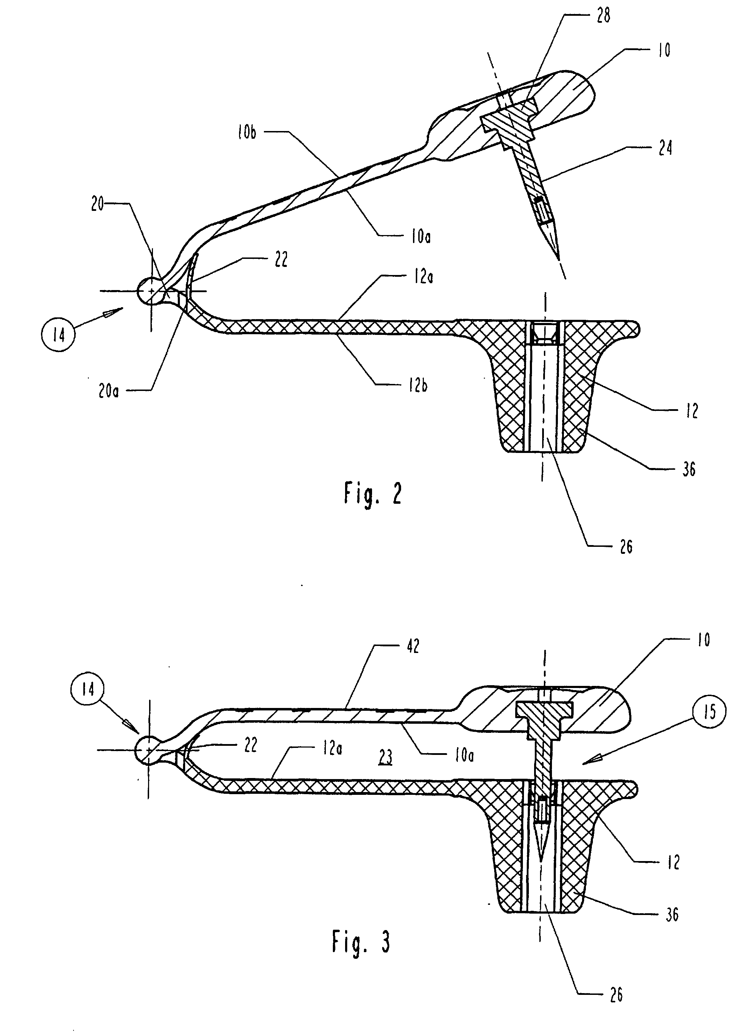

Les figures 2 et 3 sont des vues en coupes longitudinales du bouton de la figure 1, en positions ouverte et fermée; et
Les figures 4 et 5 montrent respectivement, en coupe latérale, les moyens d'assemblage et la charnière.

Le bouton d'identification représenté au dessin est formé de deux plaquettes 10 et 12, d'une charnière 14 et de moyens d'assemblage 15.

Les plaquettes 10 et 12 sont réalisées en matière plastique injectée, par exemple du PVC souple. Elles comportent des faces internes 10a et 12a et des faces externes 10b et 12b. Avant fixation, elles sont reliées l'une à l'autre, de manière articulée, au moyen de la charnière 14.

La charnière 14 comprend deux charnerons 16 et deux pivots 18, respectivement venus de matière avec les plaquettes 12 et 10.

Chaque charneron 16 est défini par une portion de tube munie d'une fente longitudinale 16a, ouverte du côté de la face interne 12a, et dont la largeur est inférieure au diamètre des pivots 18. Le tube, ainsi muni d'une fente, forme un organe élastique susceptible de se déformer radialement. Typiquement, le diamètre des pivots 18 est égal à 1,5 mm et la largeur des fentes de 1,1 mm. Avec une paroi de tube d'environ 1 mm, on obtient une élasticité telle qu'il est possible d'assembler et de désassembler facilement les deux parties 10 et 12 du bouton, sans pour autant qu'il y ait risque de désengagement lors de sa mise en place.

Les charnerons 16 définissent, entre eux, une découpe 20 destinée à recevoir l'extrémité de la plaquette 10 portant les pivots 18. La découpe 20 comprend une paroi 20a qui s'étend de l'un à l'autre des charnerons et se prolonge, en direction de la plaquette 10, par une languette 22 ayant une épaisseur de 0,3 à 0,4 mm et une longueur d'environ 6 mm. Cette languette 22 sert d'appui à la plaquette 10, de manière que la personne devant fixer le bouton puisse le tenir avec une légère pression sur les faces externes 10b et 12b des plaquettes 10 et 12 sans que le bouton se ferme.

Au voisinage de la charnière 14, les deux plaquettes présentent une légère courbe en S, de sorte qu'en position fermée, les faces internes 10a et 12a sont parallèles et distantes l'une de l'autre et forment un espace 22 permettant de recevoir l'organe sur lequel le bouton doit être fixé, par exemple une oreille de bovidé. Cet espace est avantageusement compris entre 5 et 10 mm.

Ainsi, avant que le bouton soit posé et à cause de la charnière, les deux plaquettes sont solidaires l'une de l'autre, libres en rotation, mais maintenues écartées par la languette 22.

Les moyens d'assemblage 15 sont formés d'une tige 24, solidaire de la plaquette 10 et qui forme, avec cette dernière, un élément mâle, et d'une ouverture 26 pratiquée dans la plaquette 12 qui définit ainsi un élément femelle.

La tige 24 est avantageusement réalisée en une matière plastique dure, par exemple du polyamide, assemblée à la plaquette 10 par surmoulage. L'extrémité de la tige 24 se trouvant dans la plaquette 10 est munie d'une assiette 28 assurant la solidité de l'assemblage.

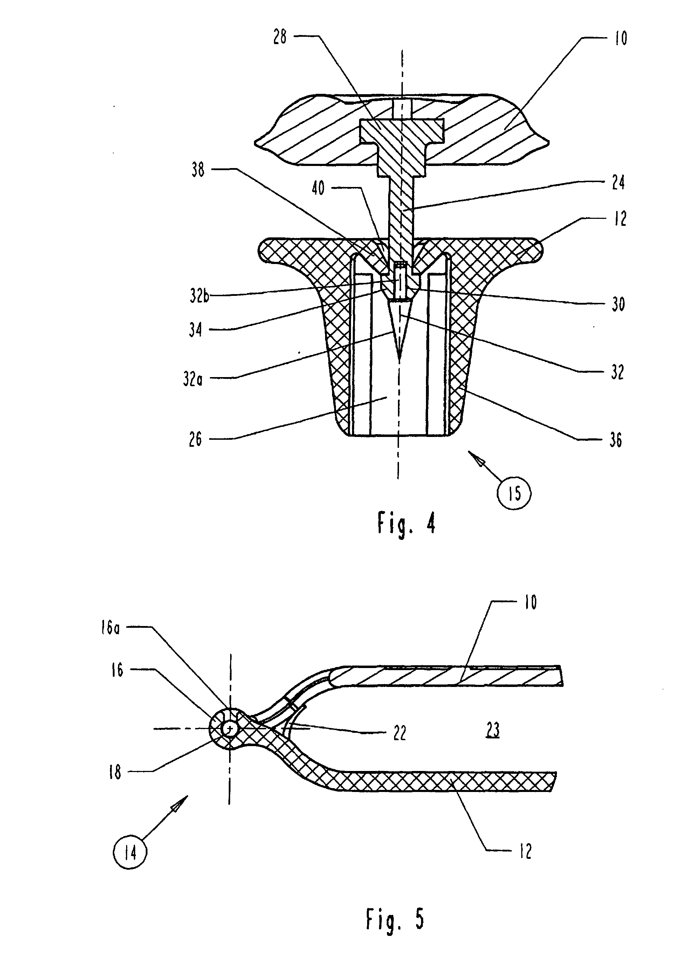

Comme on peut le voir plus précisément sur la figure 4, l'extrémité libre de la tige 24 est percée d'un trou axial 30 dans lequel est chassé un clou 32, en acier inoxydable, comportant une partie conique 32a extérieure et une partie cylindrique 32b engagée dans le trou. Cette extrémité est, en outre, munie de deux ailettes 34 diamétralement opposées, s'étendant radialement vers l'extérieur et qui prolongent la partie conique 32a.

La plaquette 12 comporte une paroi tubulaire 36 qui s'étend perpendiculairement à partir de la face externe 12b et qui forme un logement proportionné de manière à pouvoir recevoir l'extrémité de la tige 24 et plus particulièrement le clou 32 et les ailettes 34. Ce logement est partiellement fermé du côté de la paroi interne 12b par deux ergots 38 qui s'étendent radialement vers le centre et axialement vers l'intérieur du logement.

Les extrémités des ergots 38 définissent un passage de forme générale cylindrique, dont le diamètre est sensiblement égal à celui de la tige 24, prolongé vers la face interne 12b par un cône de guidage 40 dont la base a un diamètre environ deux fois supérieur à la distance séparant les ailettes 34, de manière à pouvoir facilement guider la tige 24 lors de son engagement.

Les ergots 38 définissent, en outre, dans le logement, une surface d'appui plane, parallèle à la face interne 12a, destinée à coopérer avec les ailettes 34 après leur engagement dans la plaquette 12, pour les empêcher de ressortir. Plus même, une traction sur la tige tend à fléchir les ergots 38, ce qui les amène en contact avec la partie cylindrique de la tige et bloque le tout de manière sûre.

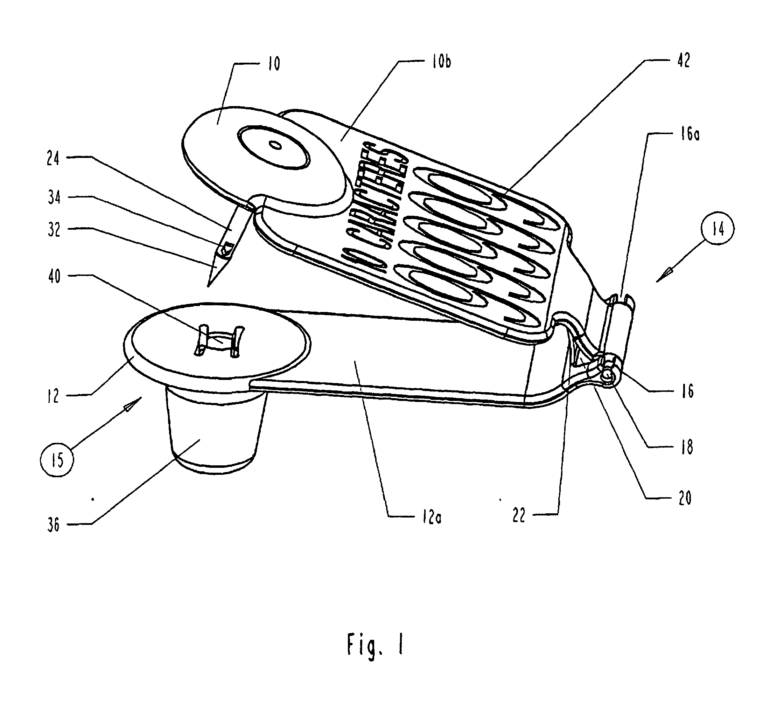

Comme on peut le voir sur la figure 1, la plaquette 10 est destinée à recevoir, dans sa partie médiane, des inscriptions 42 d'identification de l'animal portant le bouton. La plaquette 12 peut également porter des inscriptions d'identification. Celles-ci ne sont toutefois pas visibles au dessin. Ces inscriptions peuvent être faites par tout moyen, par exemple lors du moulage, par gravage au laser, ou encore au moyen d'une empreinte chaude.

La mise en place du bouton selon l'invention est facile et sûre. Après avoir pris les mesures d'hygiène nécessaires, il suffit de saisir le bouton en le tenant par les faces extérieures 10b et 12b. A cause de la lame élastique, il est possible de tenir fermement les deux plaquettes 10 et 12, sans pour autant réduire la distance comprise entre l'extrémité du clou et la face intérieure 12a. Le bouton est alors glissé de part et d'autre d'une l'oreille d'un animal à identifier, sur laquelle il doit être fixé, après quoi la pression sur les faces externes 10b et 12b est augmentée. Le clou 32 perce alors l'oreille puis s'engage dans le cône de guidage 40, qui amène ainsi la tige 24 à pénétrer entre les ergots 38. Ces derniers sont écartés, ce qui permet de laisser passer les ailettes 34, qui s'engagent derrière eux, bloquant ainsi la tige 24, solidaire de la plaquette 10, dans la plaquette 12. Les deux plaquettes sont, de la sorte, fixées l'une à l'autre de manière sûre et indémontables.

Il doit être relevé que le clou 32, en acier inoxydable, n'est en contact avec le corps de l'animal que durant la perforation de l'oreille. Dès après cet instant-là, seul le polyamide de la tige 24 est en contact direct avec le corps de l'animal. Or, ce matériau est bien toléré par l'organisme, contrairement à l'acier inoxydable, qui peut, parfois être allergène, en relarguant du nickel.

Si, au cours de sa vie, l'animal s'accroche, il est nécessaire qu'il ne soit pas blessé, mais aussi, qu'il ne perde pas le bouton d'identification. Pour assurer cette double fonction, la charnière 14 est agencée de manière à ce que les pivots 18 sortent des charnerons 16 lorsqu'une force tendant à les séparer leur est appliquée. Les essais effectués ont montré qu'une valeur limite de l'ordre de 1 à 5 daN permet d'assurer une mise en place dans de bonnes conditions tout en assurant un désengagement sans risque de blessure.

Après désengagement, les plaquettes 10 et 12 ne sont plus fixées l'une à l'autre que par la tige 24. Cette fixation est toutefois amplement suffisante pour assurer un maintien en place durant plusieurs années.

Une telle solution permet donc d'allier les avantages des solutions décrites dans les documents mentionnés plus haut, tout en en évitant les inconvénients.

Le bouton tel que décrit peut faire l'objet de nombreuses variantes sans pour autant sortir du cadre de l'invention. Tant les formes que les matériaux utilisés peuvent être changés. La réalisation de la charnière 14 peut, tout particulièrement comporter de nombreuses variantes. Il est ainsi possible de réaliser une charnière avec un seul pivot et un charneron. Il est également possible de remplacer les pivots cylindriques par des pivots coniques ou sphériques. Dans ce cas, l'organe élastique se déformera axialement plutôt que radialement.

La tige 24 peut également être réalisée de différentes manières. Il est ainsi possible de la faire entièrement en métal, par exemple en acier inoxydable. Dans ce cas, on veillera à éviter que le matériau utilisé ne pose des problèmes au niveau de la santé des animaux.

L'exemple décrit ci-dessus est, plus particulièrement, destiné à du gros bétail et spécialement aux vaches. Le même principe peut, sans autre, être appliqué à des boutons de plus petites dimensions, destinés à être fixés à l'oreille d'une chèvre ou d'un lapin. Il suffira de réduire les dimensions en conséquence.

La manière de faire figurer des informations pourrait également faire l'objet de nombreuses variantes, par exemple en utilisant un code à barre ou un système électronique.

L'application principale se rapporte au bétail d'élevage. Il est évident que d'autres domaines pourraient également être envisagés, par exemple pour marquer du gibier vif ou mort, voire des objets inertes se présentant sous forme de feuilles perforables.

## Revendications

1. Bouton d'identification formé d'une première (10) et d'une seconde plaquette (12), dont l'une (12) est munie d'une tige (24) à tête (32) de perçage et de retenue, définissant un premier axe, pour former un élément mâle et dont l'autre (10) comporte une ouverture (26) destinée à recevoir et à maintenir la tête (32) de la tige (24) et constituant un élément femelle, **caractérisé en ce que** les plaquettes (10, 12) sont reliées l'une à l'autre de manière articulée autour d'un second axe, au moyen d'une charnière (14) formée de:
• au moins un charneron (16), solidaire de la première plaquette (10),
• un pivot (18) coaxial au et engagé dans le charneron (16), et
• un organe élastique agencé de manière à se déformer lorsqu'une force dépassant une valeur limite est appliquée, et permettant alors le dégagement dudit pivot (18), hors du charneron (16).

2. Bouton selon la revendication 1, **caractérisé en ce que** le pivot (18) est cylindrique et le charneron (16) comporte un logement dans lequel le pivot est engagé, et **en ce que** le charneron (16) comporte une fente (16a) parallèle au second axe et qui définit deux lèvres qui entourent le pivot (18) et forment l'organe élastique.

3. Bouton selon l'une des revendications 1 et 2, **caractérisé en ce que** ledit pivot (18) est venu de matière avec ladite seconde plaquette (10).

4. Bouton selon l'une des revendications 1 à 3, **caractérisé en ce que** la charnière comporte deux charnerons (16) et deux pivots (18) engagés chacun dans l'un des charnerons.

5. Bouton selon l'une des revendications 1 à 4, **caractérisé en ce que** l'une desdites plaquettes (12) est munie d'une languette élastique (22), disposée au voisinage de la charnière (14) et s'étendant en direction de l'autre plaquette (10) de manière à coopérer avec sa paroi interne (10a), et agencée de manière à
• maintenir élastiquement les plaquettes (10, 12) dans une position ouverte, position dans laquelle la tige (24) est éloignée de l'ouverture (26), pour faciliter la mise en place du bouton,
• fléchir lors de la mise en place, et
• épouser la surface de ladite paroi (10a) après la mise en place.

6. Bouton selon l'une des revendications 1 à 5, **caractérisé en ce que** la plaquette (10) de l'élément mâle est faite d'une matière plastique souple et **en ce que** la tige (24) est en matière plastique dure munie à l'une de ses extrémités d'une assiette (28), moulée dans le plastique souple de la plaquette (10) de l'élément mâle, et à l'autre de ses extrémités d'un épaulement de retenue (34) et d'une ouverture (30) disposée axialement et dans laquelle est maintenu un clou (32) en métal dont la tête (32a), qui présente une forme permettant la perforation d'un organe, est en appui contre l'épaulement (34), et **en ce que** l'ouverture (26) de la plaquette (12) de l'élément femelle est en partie fermée par des ergots (38) s'étendant radialement vers son centre, la distance entre les ergots (38) étant supérieure au diamètre de la tige (24), mais inférieure à la dimension dudit épaulement (34) dans sa partie destinée à coopérer avec les ergots (38).

7. Bouton selon la revendication 6, **caractérisé en ce que** lesdits ergots (38) définissent un cône de guidage (40), ouvert vers la plaquette (10)de l'élément mâle, agencé pour faciliter l'engagement de la tige (24) dans l'ouverture (26).

8. Bouton selon l'une des revendications 6 et 7, **caractérisé en ce que** ladite ouverture (26) est entourée d'une paroi tubulaire (36) disposée sur la face externe de la plaquette (12) de l'élément femelle, définissant un logement agencé pour recevoir le clou (32) et l'épaulement (34).

9. Bouton selon l'une des revendications 6 à 8, **caractérisé en ce que** ledit épaulement (34) est défini par des ailettes s'étendant radialement de ladite tige (24) vers l'extérieur et **en ce que** lesdits ergots (38) s'étendent radialement de la paroi de l'ouverture vers le premier axe, les ailettes et les ergots comportant des surfaces d'appui respectivement parallèles aux faces internes des plaquettes (10, 12) des éléments mâle et femelle.

## Patentansprüche

1. Identifizierungsmarke, die von einem ersten Plättchen (10) und einem zweiten Plättchen (12) gebildet wird, von denen eines (12) mit einem Stift (24) mit einem Kopf (32) zum Durchbohren und Halten versehen ist, der eine erste Achse definiert, um ein männliches Element zu bilden, und von denen das andere (10) eine Öffnung (26) aufweist, die dazu bestimmt ist, den Kopf (32) des Stiftes (24) aufzunehmen und zu halten, und ein weibliches Element bildet, **dadurch gekennzeichnet, dass** die Plättchen (10, 12) miteinander um eine zweite Achse mittels eines Scharniers (14) gelenkig verbunden sind, das von
• mindestens einem Schamierteil (16), das mit dem ersten Plättchen (10) fest verbunden ist,
• einem Schwenkzapfen (18), der koaxial zu dem Schamierteil (16) ist und in ihn eingreift, und
• einem elastischen Element gebildet wird, das so ausgebildet ist, dass es sich verformt, wenn eine Kraft angelegt wird, die einen Grenzwert übersteigt, und dann das Ausrücken des Schwenkzapfens (18) aus dem Schamierteil (16) erlaubt.

2. Marke nach Anspruch 1, **dadurch gekennzeichnet, dass** der Schwenkzapfen (18) zylindrisch ist und das Schamierteil (16) einen Sitz aufweist, in den der Schwenkzapfen eingreift, und dass das Schamierteil (16) einen zur zweiten Achse parallelen Schlitz (16a) aufweist, der zwei Lippen begrenzt, die den Schwenkzapfen (18) umgeben und das elastische Element bilden.

3. Marke nach einem der Ansprüche 1 und 2, **dadurch gekennzeichnet, dass** der Schwenkzapfen (18) mit dem zweiten Plättchen (10) einstückig ausgebildet ist.

4. Marke nach einem der Ansprüche 1 bis 3, **dadurch gekennzeichnet, dass** das Scharnier zwei Schamierteile (16) und zwei Schwenkzapfen (18) aufweist, von denen jeder in einen der Scharnierteile eingreift.

5. Marke nach einem der Ansprüche 1 bis 4, **dadurch gekennzeichnet, dass** eines der Plättchen (12) mit einer elastischen Lasche (22) versehen ist, die in der Nähe des Scharniers (14) angeordnet ist und sich so in Richtung des anderen Plättchens (10) erstreckt, dass sie mit dessen Innenwand (10a) zusammenwirkt, und die so ausgebildet ist, dass sie
• die Plättchen (10, 12) elastisch in einer geöffneten Position hält, wobei in dieser Position der Stift (24) von der Öffnung (26) entfernt ist, um das Anbringen der Marke zu erleichtern,
• beim Anbringen nachgibt, und
• sich nach dem Anbringen an die Oberfläche der Wand (10a) anpasst.

6. Marke nach einem der Ansprüche 1 bis 5, **dadurch gekennzeichnet, dass** das Plättchen (10) des männlichen Elements aus einem nachgiebigen Kunststoff besteht und dass der Stift (24) aus einem harten Kunststoff besteht, der an seinem einen Ende mit einem Teller (28) versehen ist, der in dem weichen Kunststoff des Plättchens (10) des männlichen Elements ausgeformt ist, und an seinem anderen Ende mit einer Rückhalteschulter (34) und einer Öffnung (30) versehen ist, die axial angeordnet ist und in der ein Nagel (32) aus Metall gehalten ist, dessen Kopf (32a), der eine Form hat, die das Perforieren eines Elements erlaubt, gegen die Schulter (34) anliegt, und dass die Öffnung (26) des Plättchens (12) des weiblichen Elements teilweise durch Vorsprünge (38) geschlossen ist, die sich radial zu seiner Mitte erstrecken, wobei der Abstand zwischen den Vorsprüngen (38) größer als der Durchmesser des Stiftes (24) aber kleiner als die Abmessung der Schulter (34) in dem Bereich ist, der dazu bestimmt ist, mit den Vorsprüngen (38) zusammenzuwirken.

7. Marke nach Anspruch 6, **dadurch gekennzeichnet, dass** die Vorsprünge (38) einen Führungskonus (40) bilden, der zum Plättchen (10) des männlichen Elements hin offen ist und so ausgebildet ist, dass er das Eingreifen des Stiftes (24) in die Öffnung (26) erleichtert.

8. Marke nach einem der Ansprüche 6 und 7, **dadurch gekennzeichnet, dass** die Öffnung (26) von einer rohrförmigen Wand (36) umgeben ist, die auf der Außenfläche des Plättchens (12) des weiblichen Elements angeordnet ist, wobei ein Sitz gebildet wird, der so ausgebildet ist, dass er den Nagel (32) und die Schulter (34) aufnimmt.

9. Marke nach einem der Ansprüche 6 bis 8, **dadurch gekennzeichnet, dass** die Schulter (34) von Stegen begrenzt ist, die sich radial zum Stift (24) nach außen erstrecken und dass sich die Vorsprünge (38) radial zur Wand der Öffnung zur ersten Achse hin erstrecken, wobei die Stege und die Vorsprünge Halteflächen aufweisen, die jeweils parallel zu den Innenflächen der Plättchen (10, 12) des männlichen und des weiblichen Elements sind.

## Claims

1. An identification tag formed of a first and a second plate, one of which is provided with a pin with a piercing and retaining head, defining a first axis, to form a male element and the other of which includes an opening for receiving and holding the head of the pin and forming a female element, wherein the plates are connected to each other in a hinged manner around a second axis, by means of a hinge, formed of:
• at least a knuckle, secured to the first plate;
• a pivot coaxial with and engaged in the knuckle, and
• a resilient member arranged so as to be deformed when a force exceeding a threshold value is applied, thereby allowing said pivot to be released from the knuckle.

2. A tag according to claim 1, wherein the pivot is cylindrical and the knuckle includes a housing in which the pivot is engaged, and wherein the knuckle includes a slot parallel to the second axis and which defines two lips that surround the pivot and form the resilient member.

3. A tag according to claims 1 or 2, wherein said pivot is integral with said second plate.

4. A tag according to any of claims 1 to 3, wherein the hinge includes two knuckles and two pivots each engaged in one of the knuckles.

5. A tag according to any of claims 1 to 4, wherein one of said plates is provided with a resilient tongue arranged in proximity to the hinge and extending in the direction of the other plate so as to co-operate with its inner wall, and arranged so as to:
• hold the plates resiliently in an open position, in which the pin is distant from the opening, to facilitate installation of the tag,
• bend when being installed, and
• match the surface of said wall after being installed.

6. A tag according to any of claims 1 to 5, wherein the plate of the male element is made of a flexible plastic material and wherein the pin is made of hard plastic material provided at one of its ends with a dish moulded in the flexible plastic of the plate of the male element, and at its other end with a retaining shoulder and an opening arranged axially and in which is held a metal nail whose head, which has a shape allowing perforation of an organ, abuts against the shoulder, and wherein the opening of the plate of the female element is partly closed by snugs extending radially towards its centre, the distance between the snugs being greater than the diameter of the pin, but less than the dimension of said shoulder in its part intended to co-operate with the snugs.

7. A tag according to claim 6, wherein said snugs define a guide cone, open towards the plate of the male element, arranged to facilitate engagement of the pin in the opening.

8. A tag according to claim 6 or 7, wherein said opening is surrounded by a tubular wall arranged on the outer face of the plate of the female element, defining a housing arranged for receiving the nail and the shoulder.

9. A tag according to any of claims 6 to 8, wherein said shoulder is defined by wings extending radially from said pin towards the exterior and wherein said snugs extend radially from the wall of the opening towards the first axis, the wings and the snugs including support surfaces respectively parallel to the inner faces of the plates of the male and female elements.
